(19) Europäisches Patentamt
European Patent Office
Office européen des brevets

(11) **EP 2 607 473 A1**

(12) # EUROPEAN PATENT APPLICATION
published in accordance with Art. 153(4) EPC

(43) Date of publication:
**26.06.2013 Bulletin 2013/26**

(21) Application number: **11818021.5**

(22) Date of filing: **21.07.2011**

(51) Int Cl.:
*C12M 1/34* (2006.01)     *C12M 1/04* (2006.01)
*G01N 1/02* (2006.01)     *G01N 1/04* (2006.01)

(86) International application number:
**PCT/JP2011/066542**

(87) International publication number:
**WO 2012/023377 (23.02.2012 Gazette 2012/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.08.2010 JP 2010184966**

(71) Applicant: **Hitachi Plant Technologies, Ltd. Tokyo 170-8466 (JP)**

(72) Inventor: **YAMAMOTO Harumasa Amagasaki-shi Hyogo 661-8501 (JP)**

(74) Representative: **Beetz & Partner Patentanwälte Steinsdorfstrasse 10 80538 München (DE)**

(54) **METHOD FOR ARRANGING NOZZLE HOLES OF COLLECTOR NOZZLE IN AIRBORNE MICROORGANISM COLLECTION DEVICE AND AIRBORNE MICROORGANISM COLLECTION DEVICE**

(57)     In order to present an arrangement method of nozzle holes of a capturing nozzle of an air-borne bacteria capturing apparatus in which dents are hardly formed on the carrier in an operation by rotating a petri dish containing a carrier, and sticking air-borne bacteria contained in the air sucked from nozzle holes formed in a capturing nozzle on the surface of the carrier by inertia, nozzle holes 11 of a capturing nozzle 1 of an air-borne bacteria capturing apparatus characterized by rotating a petri dish 3 containing a carrier 2, and sticking air-borne bacteria contained in the air sucked from the nozzle holes 11 formed in the capturing nozzle 1 on the surface of the carrier 2 by inertia are arranged by uniform random numbers, and the density of the nozzle holes 11 per unit area is uniform.

FIG. 2

EP 2 607 473 A1

**Description**

Technical Field

The present invention relates to an arrangement method of nozzle holes of a capturing nozzle of an air-borne bacteria capturing apparatus used in measurement of environments of a bio-clean room, a manufacturing facility of aseptic foods, aseptic bottled beverage, or the like, by capturing or incubating bacteria, fungi, or other microorganisms floating in air (hereinafter called air-borne bacteria), and an air-borne bacteria capturing apparatus.

Background Art

Conventionally, to measure environments of a bio-clean room, a manufacturing facility of aseptic foods, aseptic bottled beverage, or the like, air-borne bacteria are captured and incubated, and the number of bacterial cells is counted by ATP measurement, and an air-borne bacteria capturing apparatus has been used for this purpose (see, for example, patent document 1).
However, in the air-borne bacteria capturing apparatus cited in patent document 1, conventionally, since nozzle holes of a capturing nozzle were arranged in a concentric pattern, the air flow rate passing per unit area differs partially because of fluctuations of the number of nozzles holes per unit area, and the culture medium is dried in a place of an abundant air flow rate and the capturing rate of air-borne bacterial tends to be lower, or if air-borne bacteria can be captured, and colonies may not be formed after incubation, or in a place of narrow nozzle hole pitches, captured air-borne bacteria are close to each other, and colonies may be overlaid when incubated, and the actual number of colonies may not be known, and to solve these problems, nozzle holes were arranged in a lattice pattern of specific pitches.

Prior Art Literature

Patent Document

Patent document 1: Japanese Patent Application Laid-Open No. 2000-300246

Summary of the Invention

[Problems to Be Solved by the Invention]

Meanwhile, in the method of arranging nozzle holes in a lattice pattern of specific pitches, it is an advantage that the density of nozzle holes per unit area is constant, so that a uniform suction is realized.
To the contrary, in the case of capturing for a long time, if continued to suck nozzle holes arranged in a lattice pattern, a carrier for capturing air-borne bacteria, such as agar culture medium, is promoted in drying of the carrier only beneath the nozzle holes exposed to air stream of high speed, and the volume of the carrier reduced in water content is decreased, and concave dents are generated on the carrier surface.
To decrease drying of the carrier in long-time capturing operation, even when the carrier is rotated, if the nozzle holes are arranged in a lattice pattern, plural nozzle holes are present on a same trace, concentric grooves for drying may be formed on the carrier.
This phenomenon is further described. When nozzle holes of a capturing nozzle of an air-borne bacteria capturing apparatus are arranged by N holes uniformly in a region of radius R, nozzle pitch P is expressed in formula 1.
[Formula 1]

$$P = 2R/(4N/\pi)^{1/2} \qquad \text{--- (formula 1)}$$

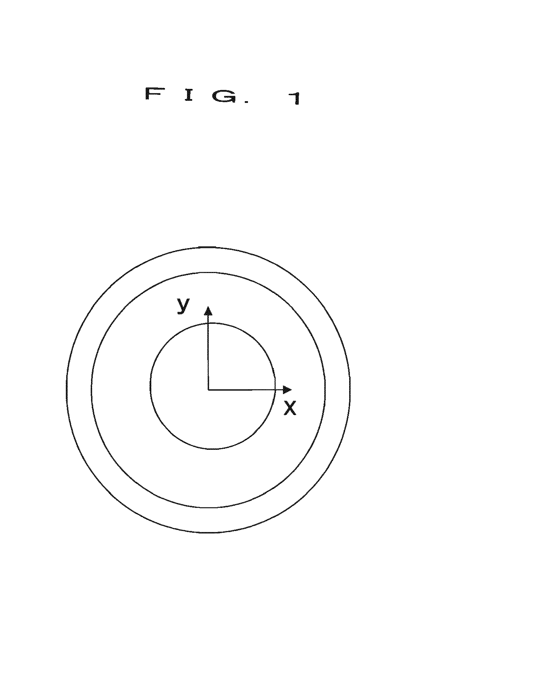

Herein, formula 1 means that the area ratio of a circle of radius R shown in Fig. 1, and a square of 2R in one side circumscribing the circle of radius R is greater in the square by 4/p and that
the number of nozzle holes converted into a square to equalize the density is

$$4N/p = 1.27N$$

and the square root of 1.27N is the number of nozzle holes of each side, and when arranged at a uniform pitch of 2N on one side, the pitch is P as expressed in formula 1.

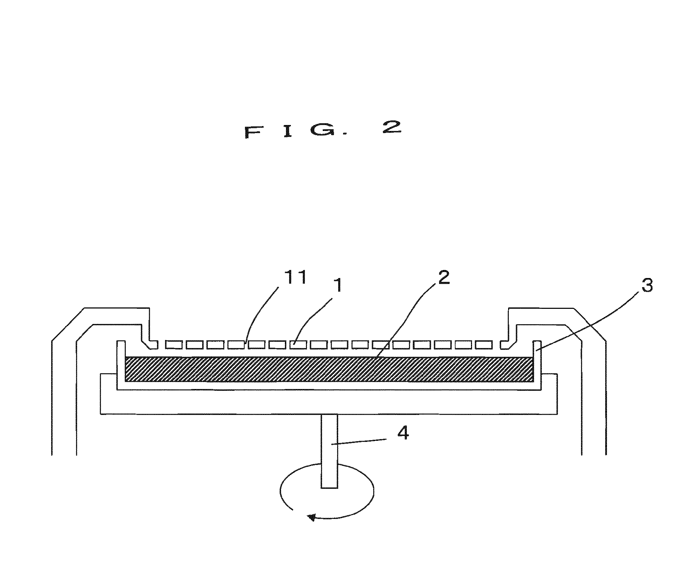

In the meantime, an approximate structure of a suction head of the air-borne bacteria capturing apparatus is as shown in Fig. 2, in which nozzle holes 11 are arranged in a lattice pattern of uniform pitch in a capturing nozzle 1 disposed at a tiny pitch in a petri dish 3 containing a carrier 2 for capturing air-borne bacteria.

The petri dish 3 is rotated by a motor (not shown) about a rotation shaft 4.

Observing the section of the carrier 2, the nozzle holes 11 draw a trace of a concentric circle about the rotation shaft by nozzle holes of an integer multiple of 4 is provided by 4 pieces or more in a square lattice, and the carrier 2 of the agar culture medium is dried only in the portions immediately beneath the trace, dents of concentric circles are formed.

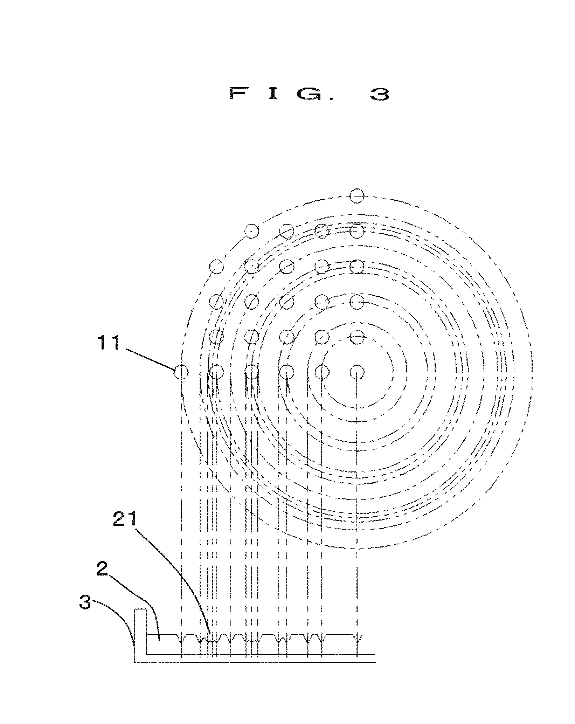

Fig. 3 shows a relation between nozzle holes 11 and dents 21 formed in the carrier 2.

In Fig. 3, the depth of the dents 21 is specific, but when the number of passing nozzle holes 11 is increased from 4, to 8, and 12, and so on, drying is promoted, and the dents 21 become deeper.

As the dents 21 are formed, and the depth grows along with duration of the capturing time, various defects are caused, for example, the tiny pitch of the surface of the carrier 2 and the nozzle holes 11 is changed, and when the pitch is increased, the air-borne bacteria colliding by inertia may not collide the carrier 2, but may pass through the carrier 2 together with the air, and the capturing efficiency of air-borne bacteria may be lowered.

The present invention is devised in the light of the problem of arrangement method of nozzle holes of a capturing nozzle of a conventional air-borne bacteria capturing apparatus, and it is hence a primary object thereof to present an arrangement method of nozzle holes of a capturing nozzle of an air-borne bacteria capturing apparatus, and an air-borne bacteria capturing apparatus.

Means for Solving the Problems

To achieve the object, the arrangement method of nozzle holes of a capturing nozzle of the air-borne bacteria capturing apparatus of the invention is an arrangement method of nozzle holes of a capturing nozzle of an air-borne bacteria capturing apparatus characterized by rotating a petri dish containing a carrier, and sticking air-borne bacteria contained in the air sucked from nozzle holes formed in a capturing nozzle on the surface of the carrier by inertia, in which nozzle holes are arranged by uniform random numbers, and the density of nozzle holes per unit area is uniform.

In this case, by utilizing the average of a plurality of uniform random numbers, the density of nozzle holes per unit area can be disposed in a normal distribution.

The air-borne bacteria capturing apparatus of the invention is an air-borne bacteria capturing apparatus characterized by rotating a petri dish containing a carrier, and sticking air-borne bacteria contained in the air sucked from nozzle holes formed in a capturing nozzle on the surface of the carrier by inertia, in which nozzle holes are arranged by uniform random numbers, and the density of nozzle holes per unit area is uniform.

In this case, by utilizing the average of a plurality of uniform random numbers, the density of nozzle holes per unit area can be disposed in a normal distribution.

Effects of the Invention

According to the arrangement method of nozzle holes of a capturing nozzle of the air-borne bacteria capturing apparatus and the air-borne bacteria capturing apparatus of the invention, by utilizing the average of a plurality of uniform random numbers, the density of nozzle holes per unit area can be disposed in a normal distribution, and by rotating a petri dish containing a carrier, and sticking air-borne bacteria contained in the air sucked from nozzle holes formed in a capturing nozzle on the surface of the carrier by inertia, dents are hardly formed on the carrier, and it is possible to solve the problem of lowering of capturing efficiency of air-borne bacteria due to generation of dents on the carrier.

Also, by utilizing the average of a plurality of uniform random numbers, the density of nozzle holes per unit area can be disposed in a normal distribution, so that dents are hardly formed on the carrier more securely.

Brief Description of the Drawings

Fig. 1 is an explanatory diagram of axes of coordinates of a petri dish containing a carrier of the air-borne bacteria capturing apparatus.

Fig. 2 is an explanatory diagram of an outline structure of a suction head of the air-borne bacteria capturing apparatus.

Fig. 3 is an explanatory diagram showing a relationship between nozzle holes and dents formed on the carrier.

Fig. 4 is a flowchart showing an example of arrangement method of nozzle holes of a capturing nozzle of the air-borne bacteria capturing apparatus.

Fig. 5 shows an example of arrangement method of nozzle holes of a capturing nozzle of the air-borne bacteria capturing apparatus, in which (a) shows a calculation example of 200 nozzle holes formed in a circle of 20 mm in radius, and (b) shows a frequency distribution by dividing the X-axis coordinate by 5 mm classes.

Fig. 6 is an explanatory diagram of average pitch and territory.

Fig. 7 is a flowchart showing an example of consideration of the average pitch and territory in the arrangement method of nozzle holes of the capturing nozzle of the air-borne bacteria capturing apparatus of the invention.

Fig. 8 is a flowchart showing an example of normal distribution in the arrangement method of nozzle holes of the capturing nozzle of the air-borne bacteria capturing apparatus of the invention.

Fig. 9 shows an example of normal distribution in the arrangement method of nozzle holes of the capturing nozzle of the air-borne bacteria capturing apparatus of the invention, in which (a) shows a calculation example of 200 nozzle holes formed in a circle of 20 mm in radius, and (b) shows a frequency distribution by dividing the X-axis coordinate by 5 mm classes.

Fig. 10 is a flowchart showing an example of parallel move of coordinates in the normal distribution in the arrangement method of nozzle holes of the capturing nozzle of the air-borne bacteria capturing apparatus of the invention.

Fig. 11 is an explanatory diagram showing a distribution in the case of conversion of distribution in a radial direction in a normal distribution.

Fig. 12 shows an example of parallel move of coordinates in a normal distribution in the arrangement method of nozzle holes of the capturing nozzle of the air-borne bacteria capturing apparatus of the invention, in which (a) shows a calculation example of 200 nozzle holes formed in a circle of 20 mm in radius, and (b) shows a frequency distribution by dividing the X-axis coordinate by 5 mm classes.

Embodiments of the Invention

Embodiments of an arrangement method of nozzle holes of a capturing nozzle of an air-borne bacteria capturing apparatus and an air-borne bacteria capturing apparatus of the present invention are described below.

The air-borne bacteria capturing apparatus applying the arrangement method of nozzle holes of a capturing nozzle of the air-borne bacteria capturing apparatus is similar to a conventional air-borne bacteria capturing apparatus as shown in Fig. 2, in which nozzle holes 11 are arranged in a lattice pattern of uniform pitch in a capturing nozzle 1 disposed at a tiny pitch in a petri dish 3 containing a carrier 2 for capturing air-borne bacteria. The petri dish 3 is rotated by a motor (not shown) about a rotation shaft 4.

When capturing air-borne bacteria by using this air-borne bacteria capturing apparatus, while rotating a petri dish 3 containing a carrier 3, air-borne bacteria contained in the air sucked from nozzle holes formed in a capturing nozzle 1 are stuck on the surface of the carrier 2 by inertia.

In this air-borne bacteria capturing apparatus, the nozzle holes 11 of the capturing nozzle 1 are arranged as follows.

As shown in Fig. 1, on the origin of center of rotation of the petri dish 3 containing the carrier 2, an x-axis and a y-axis are determined as axes of coordinates. The radius of the region for arranging the nozzle holes 11 is R.

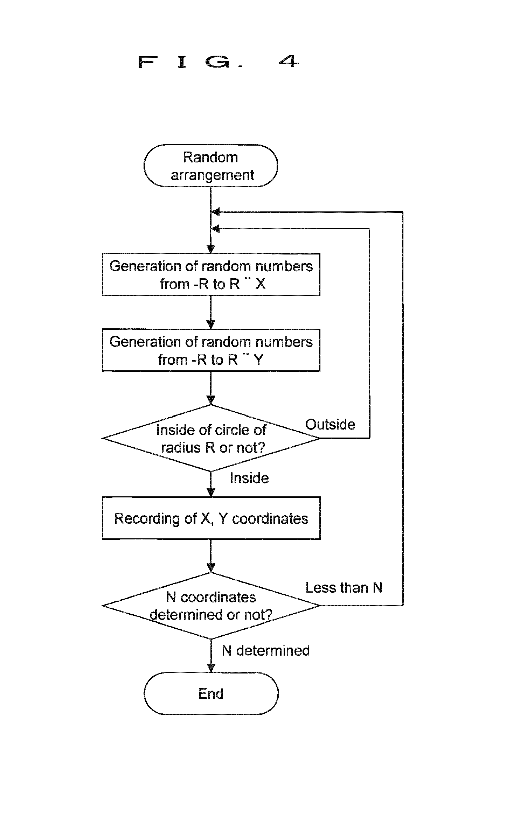

In the flowchart shown in Fig. 4, the method of arranging the nozzle holes 11 by random numbers is explained. Random numbers are generated in real number from -R to R, which are supposed to be X and Y. Judging whether X and Y to be present or not within a region of a circle of radius R, if out of the region, random numbers are generated again. Inside or outside of the circle can be easily judged in formula 2 and formula 3. That is, when formula 2 is satisfied, it is outside of the circle, and when formula 3 is satisfied, it is inside of the circle.

$$X^2 + Y^2 > R^2 \qquad \text{--- (formula 2)}$$

$$X^2 + Y^2 \leqq R^2 \qquad \text{--- (formula 3)}$$

This operation is repeated until N pieces of X-coordinate and Y-coordinate are obtained.

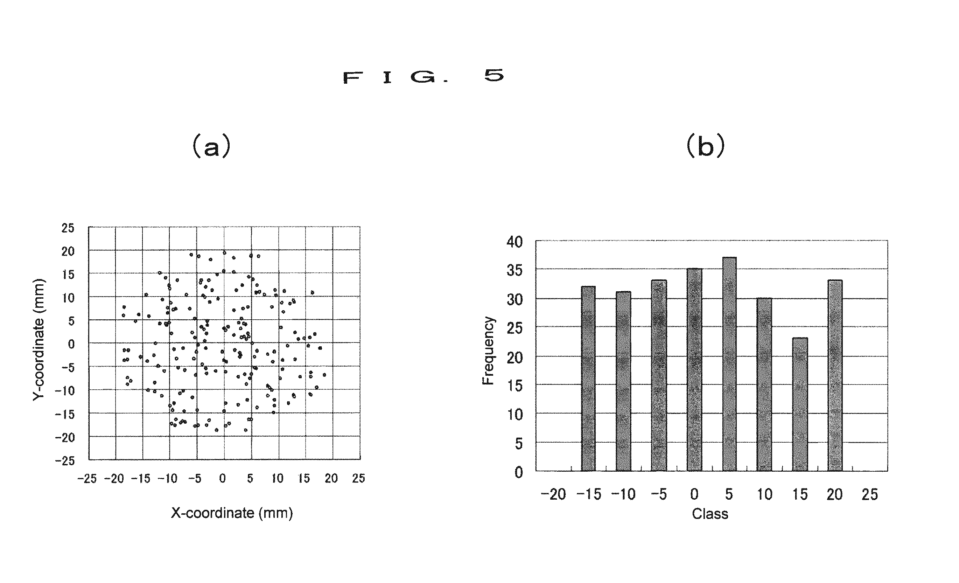

The graph in Fig. 5 (a) shows a calculation example of 200 nozzle holes formed in a circle of 20 mm in radius, and the graph in Fig. 5 (b) shows a frequency distribution by dividing the X-axis coordinate by 5 mm classes.

Herein, the graph in Fig. 5 (b) shows a frequency distribution of X-values before judging of the circle region. This is because the coordinates after judging the circle are not uniform in distribution, and the frequency distribution before judging is displayed for the ease of understanding.

Generation of random numbers is generally from 0 to 1 in the random number table or random number calculation function of table calculation software. To extend the range from -R to R, 0.5 is decreased from random numbers 0 to 1, and the result is multiplied by 2 times, random numbers from -1 to +1 are generated. When multiplied by R, the range can be extended from -R to +R.

Accordingly, the nozzle holes 11 are arranged by uniform random numbers, and the density of nozzle holes 11 per unit area is uniform, and therefore when the petri dish 3 containing the carrier 2 is rotated, the probability of achieving a same radius is smaller than in a geometrically symmetric lattice arrangement, and it is effective to decrease the troubles of dents concentrating on a specific location.

On the basis of the obtained coordinates, in the graph shown in Fig. 5 (a), for example, in a small region divided in 5 mm sections, if the pitch of adjacent nozzle holes 11 is close to beneath the machine tool limit, they are arranged again so that the pitch may be more than specified. It also contributes to keeping constant the density of nozzle holes 11. For this purpose, a territory T of each nozzle hole 11 for defining the minimum pitch of the adjacent nozzle holes 11 is determined.

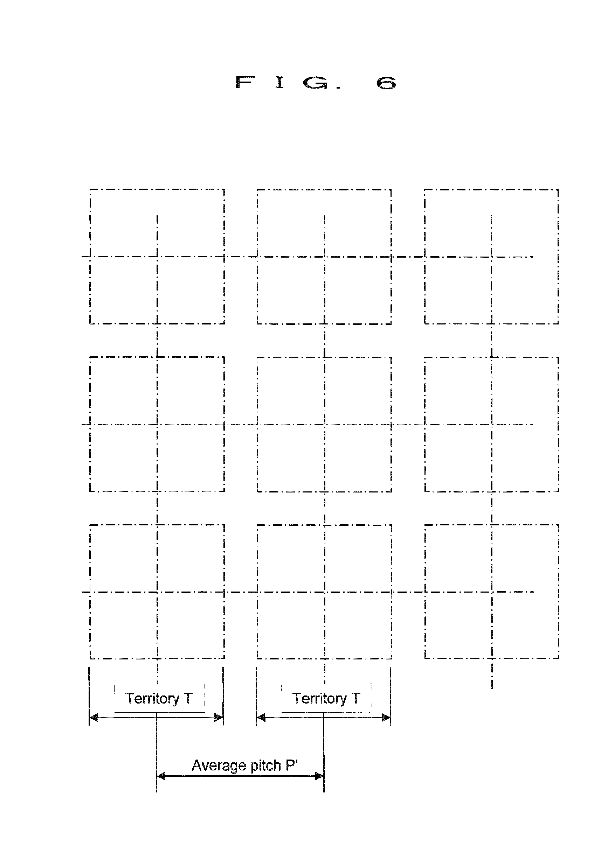

The territory T covers a region of average pitch P' shown in Fig. 6 (see formula 4 below, in the case of formula 1, it is P), and positions are dispersed within this range by random numbers.

[Formula 2]

$$\text{P'} = 2\text{R}/(4\text{N}/\pi)^{1/2} \qquad \text{--- (formula 4)}$$

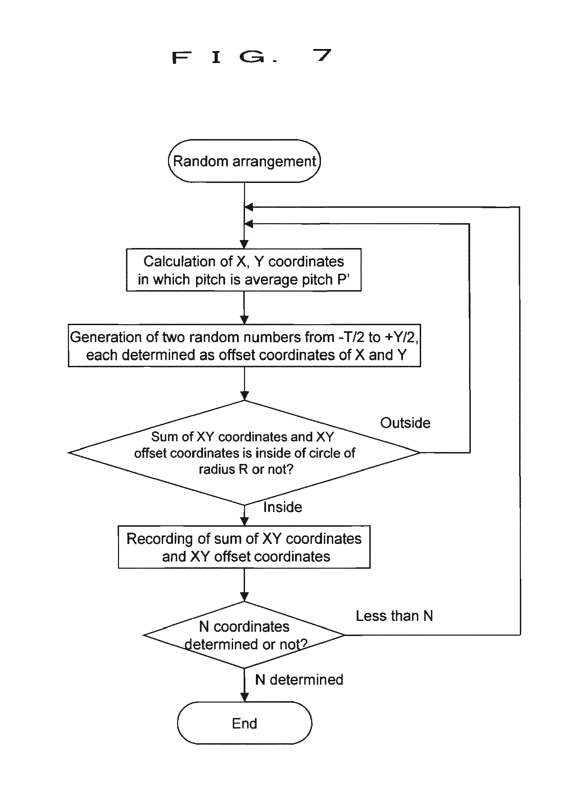

Fig. 7 shows a revised flowchart based on the flowchart shown in Fig. 4 in consideration of average pitch P' and territory T.

When the value of T for defining the territory is 0, the calculation method is same as in the flowchart in Fig. 4.

The priority of determining the average pitch P' in the first place lies in that one nozzle hole 11 each is disposed securely in the average pitch if T is not 0, and it is effective to eliminate deviation at less than the average pitch concerning the deviation of density of nozzle holes 11.

The value of T is adjusted and determined so that 2 to 5 times of the nozzle holes 11 may be spaced as a pitch of adjacent sections. For example, if the diameter of the nozzle holes is 0.5 mm, the minimum pitch of adjacent holes is defined at a machining limit T of 1.5 mm or more of three times of the diameter.

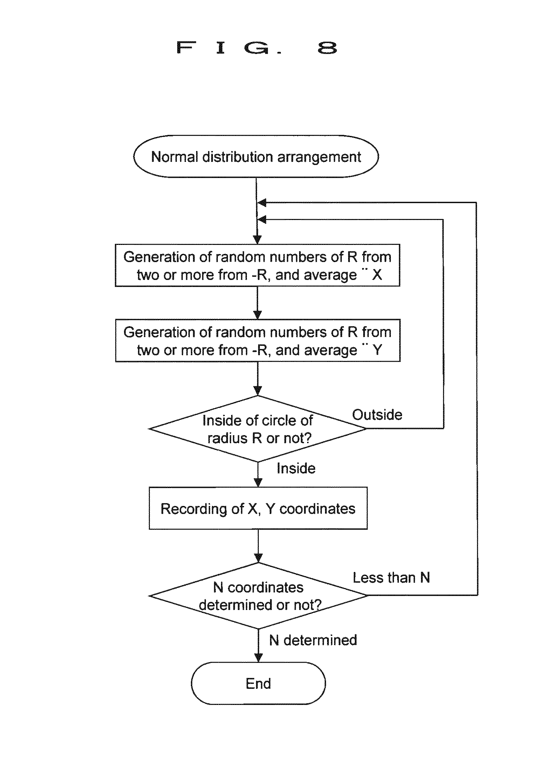

As characteristics of random numbers, plural random numbers are generated, and averaged, so that the distribution can be converted to a normal distribution. Mathematically, it can be explained by a central limit theorem. A flowchart in the case of a normal distribution is shown in Fig. 8.

In this case, the flowchart is same as in Fig. 4, except that generation of one random number is changed to generation of plural random numbers.

In the standard deviation of a normal distribution, an arbitrary interval of the normal distribution can be settled in a circle of radius R, by multiplying by a specific coefficient and by adjusting the average number of times when calculating the average of random numbers of X and Y coordinates.

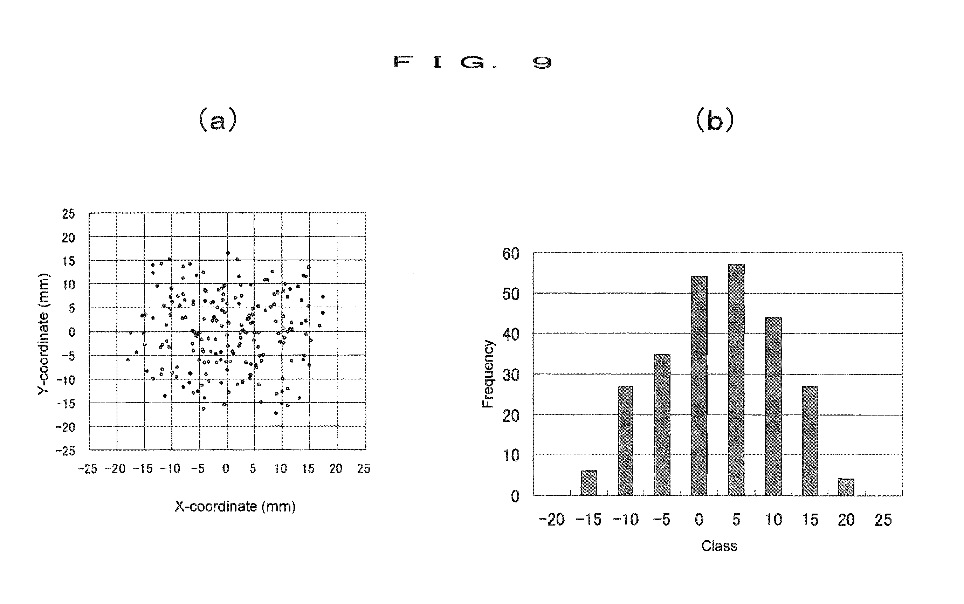

The graph shown in Fig. 9 (a) shows a calculation example of 200 nozzle holes formed in a circle of 20 mm in radius generated as an example of normal distribution, and the graph shown in Fig. 9 (b) shows a frequency distribution by dividing the X-axis coordinate by 5 mm classes.

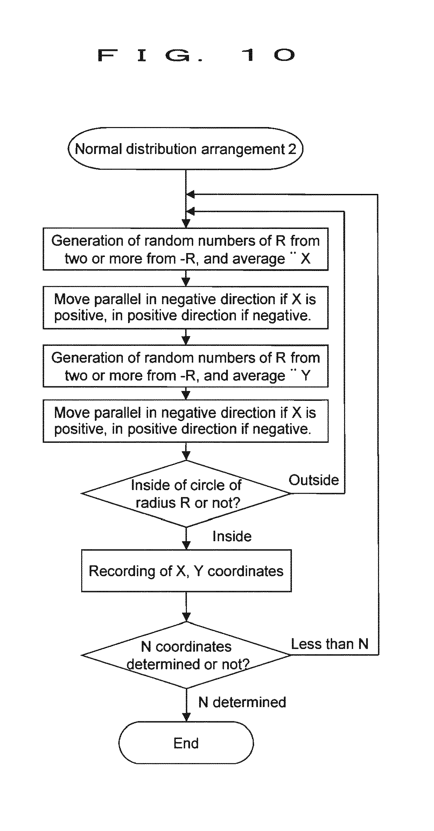

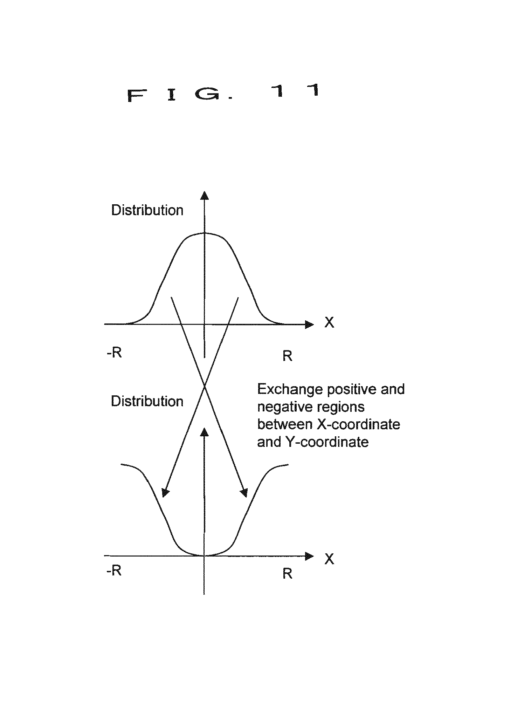

In the normal distribution, meanwhile, the density of nozzle holes 11 is high in a central area of the petri dish 3 containing the carrier 2, and the density in a peripheral area can be heightened, as shown in the flowchart in Fig. 10, by judging positive or negative by the coordinates of X and Y, and moving the coordinates in parallel, and as shown in Fig. 11, the center of high density in the center of the normal distribution is changed to the position of radius R, and the distribution of radius R is changed to the center, so that a distribution low in density in a central area can be obtained.

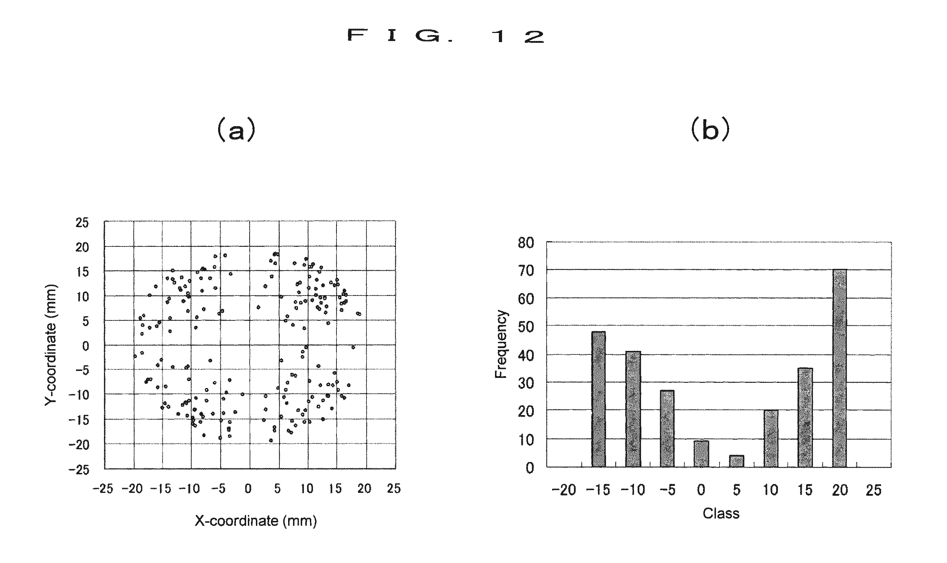

The graph shown in Fig. 12 (a) shows a calculation example of 200 nozzle holes formed in a circle of 20 mm in radius as an example of parallel move of coordinates in the normal distribution, and the graph shown in Fig. 12 (b) shows a frequency distribution by dividing the X-axis coordinate by 5 mm classes.

Herein, the arrangement method of nozzle holes of the capturing nozzle of the air-borne bacteria capturing apparatus of the invention is explained in plural embodiments, but the invention is not limited to these illustrated embodiments alone, but may be changed or modified in various manners within a range not departing from the true spirit thereof, for example, by combining the structures of the examples.

Industrial Applicability

The arrangement method of nozzle holes of the capturing nozzle of the air-borne bacteria capturing apparatus of the invention is characterized by rotating the petri dish containing the carrier, and sticking air-borne bacteria contained in the air sucked from nozzle holes formed in the capturing nozzle on the surface of the carrier by inertia, and therefore dents are hardly formed on the carrier, and the method is preferably applied in the air-borne bacteria capturing apparatus of the same system.

Description of the Reference Numerals

| | |
|---|---|
| 1 | capturing nozzle |
| 11 | nozzle hole |
| 2 | carrier |
| 3 | petri dish |
| 4 | rotation shaft |

**Claims**

1. An arrangement method of nozzle holes of a capturing nozzle of an air-borne bacteria capturing apparatus **characterized by** rotating a petri dish containing a carrier, and sticking air-borne bacteria contained in the air sucked from nozzle holes formed in a capturing nozzle on the surface of the carrier by inertia, wherein nozzle holes are arranged by uniform random numbers, and the density of nozzle holes per unit area is uniform.

2. The arrangement method of nozzle holes of a capturing nozzle of an air-borne bacteria capturing apparatus according to claim 1, wherein by utilizing the average of a plurality of uniform random numbers, the density of nozzle holes per unit area can be disposed in a normal distribution.

3. An air-borne bacteria capturing apparatus **characterized by** rotating a petri dish containing a carrier, and sticking air-borne bacteria contained in the air sucked from nozzle holes formed in a capturing nozzle on the surface of the carrier by inertia, wherein nozzle holes are arranged by uniform random numbers, and the density of nozzle holes per unit area is uniform.

4. The air-borne bacteria capturing apparatus according to claim 3, wherein by utilizing the average of a plurality of uniform random numbers, the density of nozzle holes per unit area can be disposed in a normal distribution.

F I G . 1

F I G. 2

FIG. 3

F I G . 4

```
        ┌─────────────────┐
        │     Random      │
        │   arrangement   │
        └─────────────────┘
                 │
                 ▼
   ┌───────────────────────────────┐
   │ Generation of random numbers  │
   │       from -R to R ¨ X        │
   └───────────────────────────────┘
                 │
                 ▼
   ┌───────────────────────────────┐
   │ Generation of random numbers  │
   │       from -R to R ¨ Y        │
   └───────────────────────────────┘
                 │
                 ▼
        ◇─────────────────◇
        │  Inside of circle of      Outside
        │  radius R or not?  ├──────────►
        ◇─────────────────◇
                 │ Inside
                 ▼
   ┌───────────────────────────────┐
   │   Recording of X, Y coordinates │
   └───────────────────────────────┘
                 │
                 ▼
        ◇─────────────────◇
        │   N coordinates       Less than N
        │  determined or not? ├──────────►
        ◇─────────────────◇
                 │ N determined
                 ▼
        ┌─────────────────┐
        │       End       │
        └─────────────────┘
```

EP 2 607 473 A1

F I G. 5

(a)

(b)

F I G. 6

Territory T          Territory T

Average pitch P'

EP 2 607 473 A1

F I G . 7

```
        ┌────────────────────────┐
        │   Random arrangement   │
        └────────────────────────┘
                    │
                    ▼
    ┌──────────────────────────────────┐
    │  Calculation of X, Y coordinates  │
    │  in which pitch is average pitch P'│
    └──────────────────────────────────┘
                    │
                    ▼
  ┌──────────────────────────────────────────┐
  │ Generation of two random numbers from     │
  │ -T/2 to +Y/2, each determined as offset   │
  │ coordinates of X and Y                    │
  └──────────────────────────────────────────┘
                    │
                    ▼
           Sum of XY coordinates and XY        Outside
           offset coordinates is inside of  ──────────►
           circle of radius R or not?
                    │ Inside
                    ▼
    ┌──────────────────────────────────┐
    │ Recording of sum of XY coordinates│
    │ and XY offset coordinates         │
    └──────────────────────────────────┘
                    │
                    ▼
           N coordinates              Less than N
           determined or not?     ──────────────►
                    │ N determined
                    ▼
              ┌──────────┐
              │   End    │
              └──────────┘
```

13

F I G . 8

```
        ┌─────────────────────────────┐
        │ Normal distribution arrangement │
        └─────────────────────────────┘
                      │
                      ▼
    ┌─────────────────────────────────────┐
    │ Generation of random numbers of R from │
    │ two or more from -R, and average ¨ X   │
    └─────────────────────────────────────┘
                      │
                      ▼
    ┌─────────────────────────────────────┐
    │ Generation of random numbers of R from │
    │ two or more from -R, and average ¨ Y   │
    └─────────────────────────────────────┘
                      │
                      ▼
              ◇─────────────◇
             ╱ Inside of circle of ╲   Outside
            ╲  radius R or not?    ╱ ─────────►
              ◇─────────────◇
                      │ Inside
                      ▼
        ┌─────────────────────────┐
        │ Recording of X, Y coordinates │
        └─────────────────────────┘
                      │
                      ▼
              ◇─────────────◇
             ╱  N coordinates   ╲   Less than N
            ╲ determined or not? ╱ ─────────►
              ◇─────────────◇
                      │ N determined
                      ▼
              ┌─────────────┐
              │     End      │
              └─────────────┘
```

# FIG. 9

(a)

(b)

# F I G . 1 0

Normal distribution arrangement 2

Generation of random numbers of R from two or more from -R, and average ¨ X

Move parallel in negative direction if X is positive, in positive direction if negative.

Generation of random numbers of R from two or more from -R, and average ¨ Y

Move parallel in negative direction if X is positive, in positive direction if negative.

Inside of circle of radius R or not? — Outside

Inside

Recording of X, Y coordinates

N coordinates determined or not? — Less than N

N determined

End

FIG. 11

# FIG. 12

(a)

(b)

## INTERNATIONAL SEARCH REPORT

| | International application No. |
|---|---|
| | PCT/JP2011/066542 |

A. CLASSIFICATION OF SUBJECT MATTER
*C12M1/34*(2006.01)i, *C12M1/04*(2006.01)i, *G01N1/02*(2006.01)i, *G01N1/04*(2006.01)i

According to International Patent Classification (IPC) or to both national classification and IPC

B. FIELDS SEARCHED

Minimum documentation searched (classification system followed by classification symbols)
C12M1/34, C12M1/04, G01N1/02, G01N1/04

Documentation searched other than minimum documentation to the extent that such documents are included in the fields searched

Electronic data base consulted during the international search (name of data base and, where practicable, search terms used)
JSTPlus/JMEDPlus/JST7580(JDreamII), CA/BIOSIS/MEDLINE/WPIDS(STN)

C. DOCUMENTS CONSIDERED TO BE RELEVANT

| Category* | Citation of document, with indication, where appropriate, of the relevant passages | Relevant to claim No. |
|---|---|---|
| A | JP 2009-299107 A (Nihon Ceratec Co., Ltd.), 24 December 2009 (24.12.2009), (Family: none) | 1-4 |
| A | Satoshi SAITO, "Kukishitsu no Keisoku Bunseki Gijutsu (3) Seiyaku Iryo Shisetsu ni Okeru Kuchu Fuyukin Keisoku Gijutsu", Kuki Chowa Eisei Kogaku, 2007, vol.81, no.9, pages 89 to 96 | 1-4 |
| A | JP 11-299475 A (Amano Co., Ltd.), 02 November 1999 (02.11.1999), (Family: none) | 1-4 |
| A | JP 6-160250 A (Kiyoyuki TAKESAKO), 07 June 1994 (07.06.1994), (Family: none) | 1-4 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 06 October, 2011 (06.10.11) | Date of mailing of the international search report 18 October, 2011 (18.10.11) |
|---|---|
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/066542

C (Continuation).    DOCUMENTS CONSIDERED TO BE RELEVANT

| Category* | Citation of document, with indication, where appropriate, of the relevant passages | Relevant to claim No. |
|---|---|---|
| A | JP 11-225743 A  (Kabushiki Kaisha E JET),<br>24 August 1999 (24.08.1999),<br>(Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

*   JP 2000300246 A